# EUROPEAN PATENT SPECIFICATION

(11) **EP 3 228 184 B1**
(45) Date of publication and mention of the grant of the patent: **23.12.2020**
(21) Application number: 16290063.3
(22) Date of filing: 05.04.2016
(51) Int. Cl.: A01G 9/02, E04C 1/39

(54) **MODULAR SYSTEM FOR BUILDING A PLANTABLE WALL**
MODULARES SYSTEM ZUR HERSTELLUNG EINER BEPFLANZBAREN MAUER
SYSTÈME MODULAIRE POUR LA CONSTRUCTION D'UNE PAROI À PLANTER

(43) Date of publication of application: 11.10.2017
(73) Proprietor: Holcim Technology Ltd, 8645 Jona (CH)
(72) Inventor: Jay, Pascal, 38090 Vaulx-Milieu (FR); Lombois-Burger, Hélène, 69003 Lyon (FR); Chodorge, Ghada, 69003 Lyon (FR)
(74) Representative: Keschmann, Marc

(56) References cited:
- WO-A1-2009/152740
- WO-A1-2014/154970
- BR-A2-102012 018 727
- CN-B- 103 132 540
- DE-A1- 2 609 321
- DE-U1- 29 820 798
- JP-A- 2010 148 469

## Description

The invention refers to a modular system for building a plantable wall and to a plantable wall made from such a modular system.

Green walls are becoming popular because of the pleasant appearance and the feeling of purity of the environment. A green wall may be realized as a freestanding wall or as a part of a building that is partially or completely covered with vegetation. The vegetation for a green façade is generally attached on outside walls of a building.

Various systems exist for growing plants on vertical surfaces, such as walls. One of the systems commonly used comprises a metallic mesh mounted on the wall for holding a layer of soil between the mesh and the wall. Such systems are expensive and inflexible, because the whole metallic mesh including the soil and the plants must be disassembled in to order to allow for maintenance. Further, the plant roots are mainly oriented horizontally in such systems, which limits the vegetalization potential and increases the watering needs.

Other systems comprise stackable planter units, each with plural sections, in which plural plants can be planted (WO 2011/136842 A1), or at least one stack of superposed bins (EP 1690448 A1). US 2012/0180388 A1 describes a gardening wall made from planter blocks that are stackable and interlock with each other.

EP 2341187 A2, FR 2637626 A1 and WO 2014/154970 A1 disclose plantable walls that are assembled from a plurality of plantable masonry blocks. The blocks each comprise a compartment or a cavity for receiving soil to allow the growing of plants. The drawback of such systems made from masonry blocks is that they are not modular, which means that the whole wall must be disassembled in order to change one element or planting unit for maintenance. Further, the compartments provided in these blocks for receiving soil usually are very small and do not allow for a vertical growth of the plants, which limits the variety of plants that can be used in these walls.

As disclosed in US 5,601,384 A, several approaches have also been used in the past to construct retaining walls incorporating plantable space. Retaining walls are used in landscaping projects and are designed and constructed to resist the lateral pressure of soil when there is a desired change in ground elevation. It has been suggested to construct retaining walls from a plurality of blocks so that it has one or more terraces that can be planted. However, a terraced wall may be disadvantageous in some cases, in which a vertical wall is desired. Alternatively, retaining walls have been suggested that use specialized retaining wall units designed to accommodate planting. For example, the wall may be constructed with spaces between horizontally adjacent blocks which allows the soil behind the wall to be accessed for planting. However, for greater flexibility in cases where terraced walls or walls with spaces are not appropriate, US 5,601,384 A proposes to use wall blocks that each comprise a plant-receiving cavity formed in the top surface of the block. However, such a wall system is not modular, which means that the whole wall must be disassembled to change one block or one plant unit for maintenance.

WO2009/152740A1 discloses a modular system for building a plantable wall, comprising hollow masonry blocks with openings in their bottoms and insertable containers configured as open-top drawers with openings in their bottoms, whereby the openings in the blocks overlap with the openings of the containers when the containers are inserted into the blocks, which provides for eased distribution of water among the individual containers. A major drawback of the modular system of WO2009/152740A1 is that excess rainwater or excess water due to excessive watering of the plantable wall drains over the open-top of the container in an unguided fashion, thereby carrying along planting substrate and negatively affecting the outer appearance of the wall.

Therefore, the instant invention aims at providing an improved system for building planted walls that does not have the disadvantages of the prior art as outlined above. In particular, the invention aims at providing a system for erecting planted walls that is modular and thus flexible so that a variety of configurations can be realized and the configurations can be changed due to maintenance or due to aesthetical reasons. For example, it would be favourable to realize a plantable wall, that allows to change appearance by easily replacing damaged or rotten plants by new plants. Further, it would be favourable to realize a plantable wall, which allows the plant care to be simplified by enabling an easy access to the plants and the soil.

Further, it is an object of the invention to improve a plantable wall such that the wall has good sound insulation properties if desired.

Further, it is an object of the invention to improve a plantable wall such that the watering needs are reduced. In order to solve these and other objects, the invention according to a first aspect thereof provides a modular system according to claim 1. The system comprising hollow masonry blocks made from concrete, said blocks having planar bearing surfaces for placing the blocks onto each other and further having a front and a rear side and the building blocks each defining a cavity that opens to the front side of the block, the system further comprising containers for receiving plantation substrate, wherein the containers are each configured as an open-top drawer that is insertable into the cavity from the front side of the blocks. Thus, the invention provides two sorts of modules the masonry blocks that define the wall structure and the containers in the form of drawers for receiving the plants. The function of the masonry blocks is to form the structural basis for building the wall by arranging the blocks side by side and on top of each other like conventional building blocks, with the stacking being done at 90° of the conventional method so that the drawers can be inserted into the openings. The blocks can preferably be bonded together by means of an adhesive, such as mortar or the like, to form a rigid bearing structure. The masonry blocks of the invention are made from concrete so that they can be produced in a cheap and efficient way by using conventional techniques known in the concrete industry or the precast industry. In particular, the masonry blocks are made as precast concrete blocks.

The wall erected from the masonry blocks provides a plurality of cavities, into which the inventive containers can be inserted from the front side of the wall. The containers are functioning like drawers, so that they can easily be inserted and removed from the cavities formed by the blocks. Thereby, a modular system is realized, in which containers can selectively be added or removed from the blocks without having to disassemble the wall. Removing of containers is beneficial for example for maintenance purposes.

The containers may be made of various materials, such as precast concrete, high performance concrete, plastic, clay, or metal. According to the invention the blocks are made from concrete. The containers are realized as open-top drawers so that they can easily be filled with soil from the top and the plants can easily be planted when the drawers are withdrawn from the cavities of the blocks. Further, the containers provide ample space for arranging plants, wherein such plantation space allows to grow a great variety of plants, including plants having larger dimensions.

The masonry blocks preferably have a box-shaped profile consisting of four walls arranged at right angles relative to each other. The top and the bottom wall provide the planar bearing surfaces for placing the blocks onto each other. The top and the bottom walls are connected with each other by side walls, wherein the top wall, the bottom wall and the two side walls define the at least one cavity for receiving the containers. A single cavity may be defined by the walls making up the block or a plurality of cavities may be provided. According to a preferred embodiment of the invention, the blocks each comprise two cavities that open to the front side and optionally to the rear side of the block, the two cavities being separated by a vertical separating wall.

The at least one cavity is open on the front side of the block, in order to allow the insertion and the removal of the drawer. The cavity may be closed at the rear side by realizing the blocks with a rear wall. However, according to a preferred embodiment of the invention, the cavity opens not only to the front side of the block, but also to the rear side of the block. In this way, the wall may be vegetalized not only on a single side, but on its both sides.

According to another preferred embodiment, the rear side of the drawers may be a wire netting or mesh that retains the soil and is permeable to water, or a membrane impermeable to water.

According to another embodiment, the front side of the drawers may be a wire netting or mesh that retains the soil to improve the sound insulation properties of the vegetalized wall.

When a wall shall be realized that is vegetalized on two opposite sides, the wall may be assembled as a double-wall structure, wherein the wall, in its thickness direction, is composed from two blocks. In particular, according to a preferred embodiment, two walls made from masonry blocks are arranged one at another, wherein the rear sides of the blocks of a first wall and the rear sides of the blocks of a second wall are facing each other and preferably positioned against each other, containers begin inserted into the cavities from the opposite front sides of the first and the second wall. In this connection, a further preferred embodiment provides that the masonry blocks of the first wall and the masonry blocks of the second wall are arranged offset to each other in the height direction, wherein the offset preferably corresponds to half the height of a masonry block. The blocks can be assembled following a plan of layout and specifications.

The masonry blocks preferably have a cuboid shape, meaning that the box-shaped profile has the shape of a rectangle, the longer side of the rectangle defining the length of the block and the shorter side defining the width of the block. Preferably, the length of the block corresponds to twice the width of the block. In this way, the blocks may be placed either horizontally or vertically and the wall may be built by combining horizontally oriented and vertically oriented blocks. Orienting the blocks horizontally means that the blocks are arranged with their length extending horizontally. Orienting the blocks vertically means that the blocks are arranged with their length extending vertically.

The cavity of the block preferably has the shape of a cube so that a uniform type of containers can be used irrespective of whether the blocks are positioned horizontally or vertically.

According to a preferred embodiment, the top wall and the bottom wall of the blocks each comprise a least one opening for obtaining an open connection between the cavities of stacked blocks. This allows the plantation spaces of the containers, when placed inside the cavities, to be connected with each other. Thus, the plantation space of a container arranged in a cavity of a lower block is connected with the plantation space of a container arranged in a cavity of an upper block that is arranged on top of the lower block, the connection being realized via said opening. In this way, a continuity of the plantation substrate arranged in the various containers is achieved, which is important for the acoustic properties of the wall and also facilitates filling the drawers with soil.

A further effect of the plantation spaces being connected to each other is that water contained in the plantation substrate of an upper block can flow into the plantation substrate of a lower block via the openings so that excess water may escape and the watering logistics are simplified. In order to ease the distribution of water among the containers and in order to enhance the continuity of the plantation substrate, also the containers preferably have an opening in their bottom, said opening overlapping with the opening in the top and bottom wall of the block when the container is inserted into the cavity. The opening in the bottom of the containers may be designed as one single, larger opening, the dimension and shape of which preferably corresponds to the dimension and shape of the openings realized in the top and bottom wall of the blocks. Alternatively, a plurality a small openings may be provided in the bottom of the containers, so that the bottom may be perforated. Further, the at least one larger opening or the plurality of smaller openings may be covered by a filter layer or by a membrane.

Preferably, the drawers have breakable openings that allow or not to have vertical columns of soil once the vegetalized wall is erected.

Preferably, said opening of the top and bottom walls of the block is adjoining the rear side of the block and preferably is substantially U-shaped. This allows an easy and cheap production of the blocks as a precast concrete element. In the precast concrete manufacturing process, concrete is casted into forms and then cured in a controlled environment. For producing the masonry blocks, forms are preferably used that define a box-shaped profile, wherein the top, bottom and side walls of the box-shaped form are arranged vertically and concrete is poured into the form from above. The form is vibrated in order to achieve a homogenous structure of the concrete, except if a self-levelling concrete is used. In order to realize the opening in the top and/or bottom wall of the block in the same process step, a die is advanced into the form from above for displacing concrete from where the opening shall be provided.

The rear side of the container may be open or may comprise a rear wall. Preferably, the rear wall may be realized as a removable wall, so that the rear side may alternatively be configured either open or closed. The rear wall may preferably be configured as a filtering element, thereby withholding the plantation substrate, but allowing water to be rinsed out.

The container and the cavity of the blocks may comprise elements interlocking with each other by form fitting, in order to secure the container from falling out from the cavity. The interlocking elements may preferably comprise a male and a female element such as a groove and a tongue that cooperate with each other for holding the container in its position when arranged in the cavity.

Further, the blocks may comprise clamping means for clamping a flexible tube or house for feeding water for watering purposes. The clamping means may be configured as a nut or a channel realized in the block, into which said tube or hose is clamped.

The containers may have various shapes provided that the open top of the containers allow the plants to grow out of the container and vegetalize the front side of the wall. In this connection, according to a preferred embodiment of the invention the container, when completely inserted into the cavity of the block, the container presents a protruding section that at least partially protrudes from the front side of the block, the protruding section preferably forming a collecting tray for collecting rain water. In this way, the protruding section fulfils two functions, namely to allow the collection of rainwater and to provide a space for the plants to emerge from the container. Preferably, the container has an inclined front wall defining said collecting tray.

The inventive modular system may comprise further components in addition to the masonry blocks and the containers. For example, the system may further comprise decoration elements, preferably in the form of blocks or cubes, the decoration elements being configured to be insertable into the cavity from the front side of the masonry blocks. The decoration element may enhance the aesthetic appearance of the plantable wall by providing various visual effects.

According to the invention the system also comprises draining blocks configured to be insertable into the cavity from the front side of the masonry blocks. The draining blocks are either made from a wire netting that houses draining elements, such as pebble stones, or are a block of pervious concrete. Such draining blocks allow the draining of rainwater and can be arranged below a group of blocks, in which planted containers are positioned.

According to a second aspect, the invention provides a plantable wall built from the inventive modular system, wherein a plurality of masonry blocks are stacked onto each other to form the wall, containers being inserted into the cavities from the front side of the blocks.

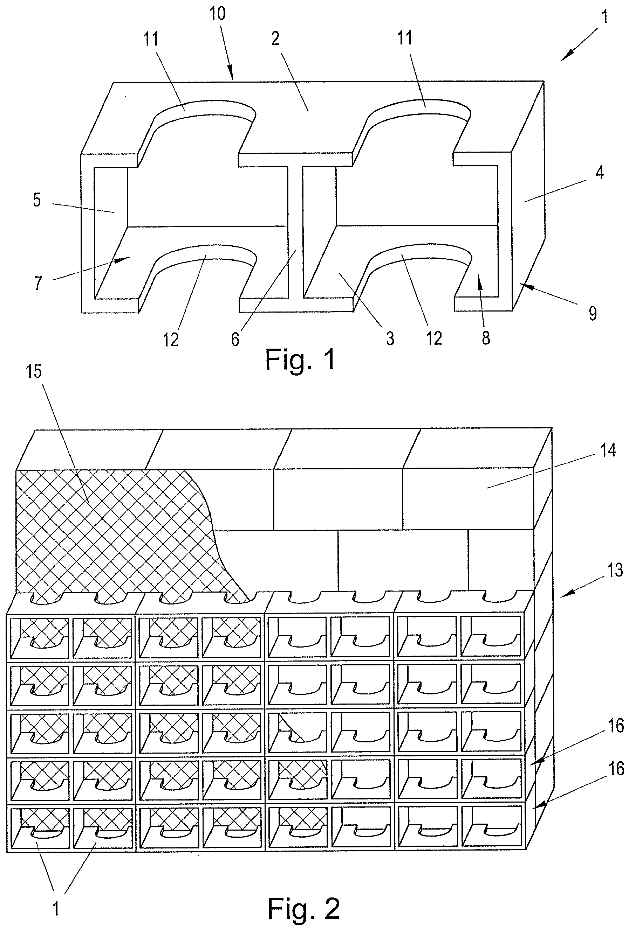

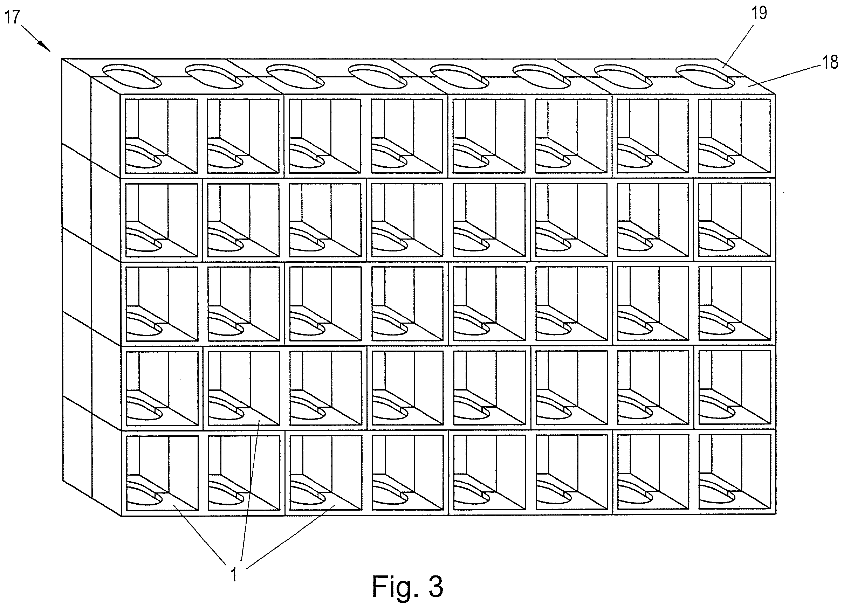

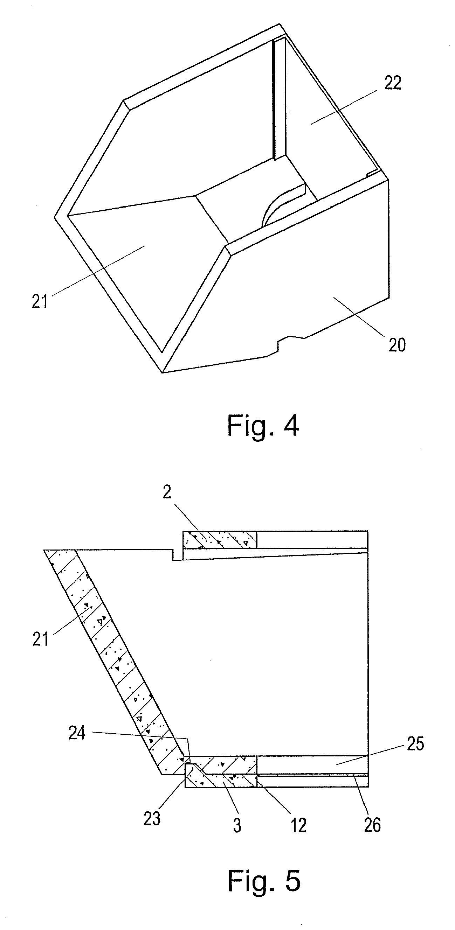

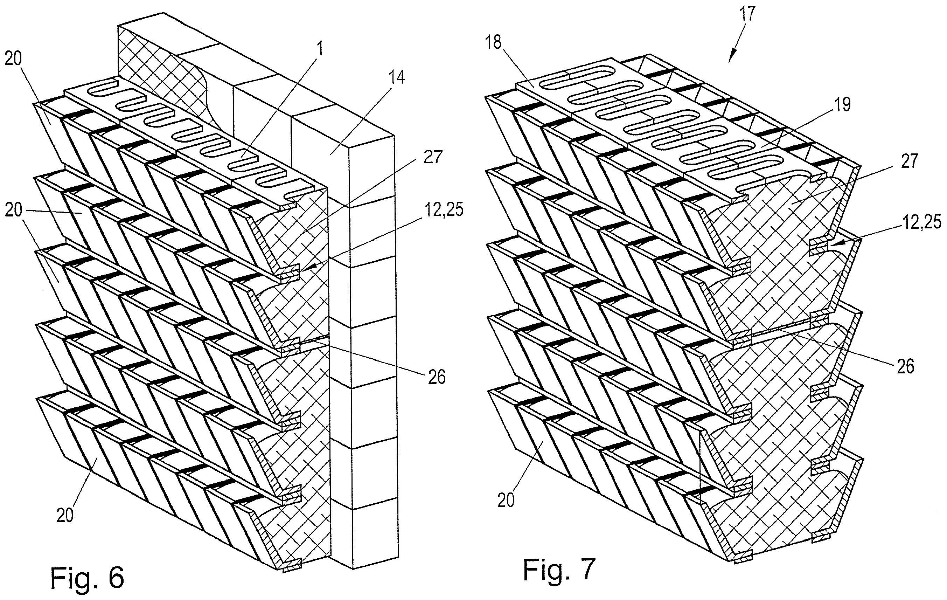

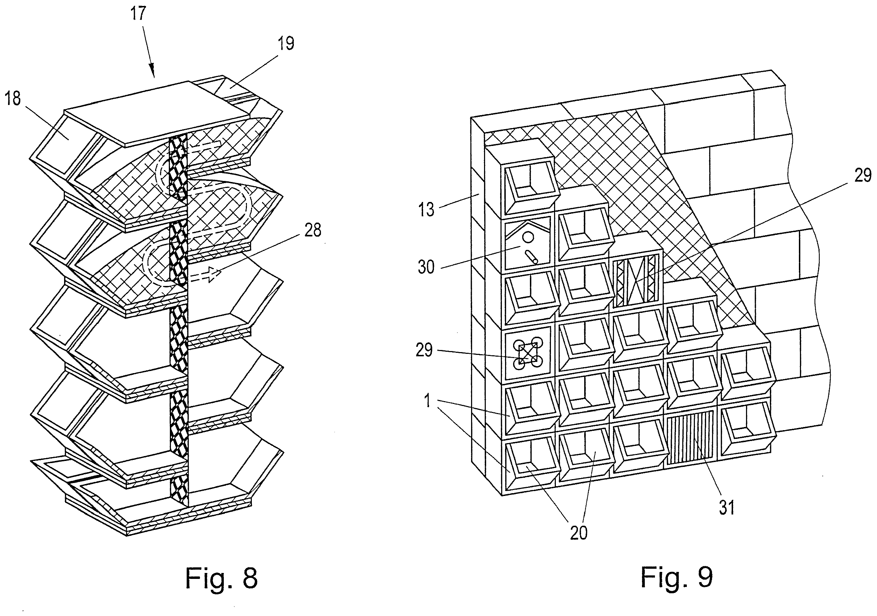

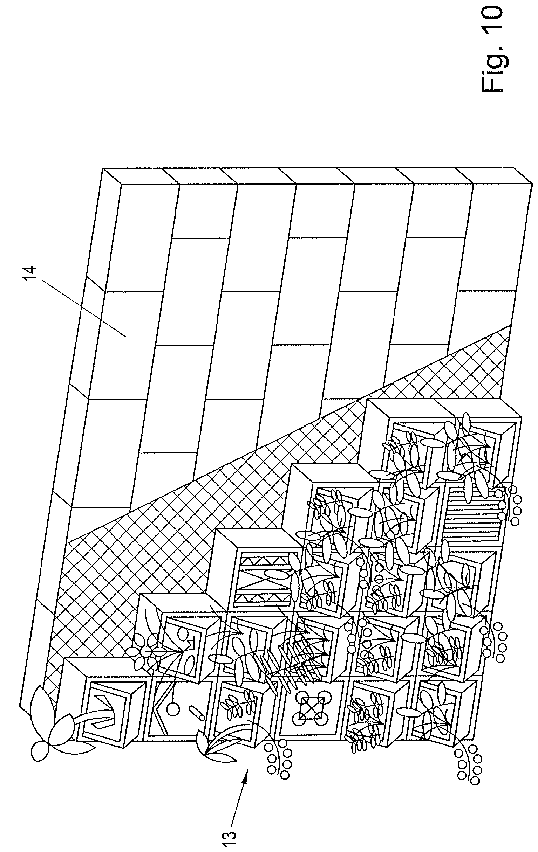

The invention will now be explained in more detail by way of reference to the attached drawings. Fig. 1 shows a masonry block of the invention, Fig. 2 shows a wall structure built from the blocks of Fig. 1, Fig. 3 shows a double wall structure built from the blocks of Fig. 1, Fig. 4 illustrates a container in the form of a drawer to be inserted into a cavity of the blocks, Fig. 5 shows the container of Fig. 4 inserted into the cavity of a block, Fig. 6 shows the wall of Fig. 2 with containers being arranged in the cavities of the blocks, Fig. 7 illustrates the double wall of Fig. 3 with containers being arranged in the cavities of the blocks, Fig. 8 illustrates a modified embodiment of the double wall of Fig. 7, Fig. 9 illustrates a first example of a wall with different modules being used in the cavities of the blocks and Fig. 10 illustrates a second example of a wall with plants being planted.

Fig. 1 illustrates a masonry block 1 made from precast concrete. The block has a box-shaped profile and comprises a top wall 2, a bottom wall 3 and side walls 4 and 5. Further, a separating wall 6 is provided for defining two cavities 7 and 8 in the inside of the block 1. Each cavity 7, 8 is open at the rear side 9 as well as at the front side 10 of the block 1. The top wall 2 and the bottom wall 3 each have openings 11 and 12, respectively, so that the cavity 7 as well as the cavity 8 each have an opening at the top and at the bottom. The openings 11 and 12 are U-shaped and are adjoining the rear side 9 of the block 1.

The top wall 2 and the bottom wall 3 of the block 1 each define a planar bearing surface for placing the blocks onto each other. In this way, the block 1 may be stacked in order to erect a wall, such as the wall 13 illustrated in Fig. 2. An existing wall 14 is used as a support for the wall 13. The wall 14 may be an exterior wall of a building that shall be provided with plants. Before placing the block 1, the existing wall 14 is provided with an insulating coat of paint and/or an insulating sheet 15 disposed on its external side. Then, the block 1 are placed side by side in order to obtain a row 16 of block 1. A plurality of rows 16 of block 1 are arranged onto each other to form a wall 13. The rear side 9 of the block 1 are placed against the wall 14 or the insulating sheet 15. The cavities 7,8 of the block 1 are open at the front side 10 of the blocks so as to allow the insertion of planting containers as described in the following.

As shown in Fig. 3, the block 1 may also be used to erect a double wall construction 17. To this end, two walls 18, 19 each made from block 1 are put together with the rear sides 9 of the block 1 arranged at each other. The front sides of the walls 18, 19 are arranged on opposite sides of the double wall 17, so that planting containers may be introduced into the cavities 7,8 of the block 1 from both sides of the wall 17.

In Fig. 4 a container 20 for receiving a plantation substrate is shown. The container 20 has a width that substantially corresponds to the width of the cavity 7, 8 of the block 1. Further, the container 20 has a height that substantially corresponds to the height of the cavity 7, 8 of the block 1. The depth of the container 20 is such that the container 20, when fully inserted into the cavity 7, 8 of the block 1, protrudes from the block 1 with the inclined front wall 21 forming a collecting tray for collecting rain water. The rear wall 22 of the container 20 may be configured as a fixed wall or as a removable wall. In case the rear wall 22 is removable, rear walls 22 having different properties can be used depending on the respective condition. For example, a rear wall 22 being configured as a filter or an impermeable membrane may be used.

In Fig. 5 a cross sectional view of the container 20 is shown when inserted into the cavity 7, 8 of the block 1. The bottom wall of the block 1 may have a ridge 23 at its front edge, which cooperates with a respective nut 24, in order to secure the container 20 in its position when inserted into the cavity 7, 8. Further, an opening 25 is visible in the bottom of the container 20, wherein the dimension and the shape of the opening 25 is substantially identical with the opening 12 in the bottom wall 3 of the block 1. The opening 25 may be closed by a cover section 26 of the bottom, wherein the cover section 26 has a thickness that is a fraction of the thickness of the bottom so as to provide a cover section 26 that can be broken away in order to open the opening 25 if desired. In this way, one type of container 20 may be used for different purposes, wherein the cover section 26 is either left in place in order to provide a container 20 having a closed bottom or the cover section 26 is broken away in order to provide a container 20 having an open bottom.

The effect of having a closed bottom or an open bottom can be seen in the illustration according to Fig. 6. Fig. 6 shows a single wall 13 that is built against an existing wall 14, as described in more detail in Fig. 2. Each cavity 7, 8 of the blocks 1 houses a container 20 that protrudes from the front side of the blocks 1 as shown in Fig. 5. The containers are filled with a plantation substrate 27. When the top wall 2 and the bottom wall 3 of the blocks as well as the bottom of the container 20 have an opening 25 with the cover section 26 having been removed, the plantation substrate 27 of the containers 20 of the lower three rows of blocks 1 and the plantation substrate 27 of the containers 20 of the upper two rows of blocks 1 each form a continuous phase. Between the upper two rows of blocks and the lower three rows of blocks, a separation is achieved by the cover sections 26 not having been removed.

Fig. 7 shows a similar configuration as in Fig. 6, with the only difference being that Fig. 7 shows a single wall 13, whereas Fig. 8 shows a double wall structure 17 in accordance with Fig. 3. Containers 20 have been inserted into the cavities 7,8 of the blocks 1 from both sides of the double wall 17. The rear walls 22 of the containers 20 have been removed so that a continuity of the plantation substrate 27 contained in opposite containers 20 is achieved.

Fig. 8 shows a modified embodiment, in which the blocks 1 of the wall 18 and the blocks 1 of the wall 19 are offset relative to each other in the height direction. The plantation substrate contained in the individual containers 20 is connected with each other to form a continuous phase by the rear walls 22 of the containers 22 being removed or at least being water permeable. Thus, the water entering the top containers 20 may flow down through the lower containers according to arrow 28.

Fig. 9 shows the use of different modules that are received in the cavities 7,8 of the blocks 1. In addition to the containers 20 used to receive plantation substrate for growing plants, some blocks 1 receive decoration elements 29, preferably in the form of blocks, and some blocks 1 receive draining blocks 31 made from a wire netting that houses draining elements, such as pebble stones. Further, an element 30 is realized as a birdhouse.

Fig. 10 shows the wall of Fig. 9 with plants growing out of the containers 20.

## Claims

1. Modular system for building a plantable wall (13), comprising hollow masonry blocks (1), said blocks (1) having planar bearing surfaces for placing the blocks (1) onto each other and further having a front (10) and a rear side (9) and the building blocks (1) each defining a cavity (7,8) that opens to the front side (10) of the block (1), the system further comprising containers (20) for receiving plantation substrate, wherein the containers (20) are each configured as an open-top drawer that is insertable into the cavity (7,8) from the front side (10) of the blocks (1), **characterized in that** said blocks are made from concrete and the containers (20) have an opening (25) in their bottom, said opening (25) overlapping with the opening (11) in the bearing surface of the block (1) when the container (20) is inserted into the cavity (7,8), wherein the system further comprises draining blocks (31) configured to be insertable into the cavity (7,8) from the front side (10) of the masonry blocks (1), wherein the draining blocks (31) are made from a wire netting that houses draining elements, such as pebble stones or the draining blocks (31) are made from a block of pervious concrete having a void content of between 10% and 35%.

2. Modular system according to claim 1, wherein the bearing surfaces each comprise a least one opening for obtaining an open connection between the cavities (7,8) of stacked blocks (1).

3. Modular system according to claim 1 or 2, wherein the opening of the bearing surface and/or the opening of the container bottom (25) is adjoining the rear side (9) of the block (1) and preferably is substantially U-shaped.

4. Modular system according to claim 1, 2 or 3, wherein the container (20), when completely inserted into the cavity (7,8) of the block (1), presents a protruding section that at least partially protrudes from the front side (10) of the block (1), the protruding section preferably forming a collecting tray for collecting rain water.

5. Modular system according claim 4, wherein the container (20) has an inclined front wall (21) defining said collecting tray.

6. Modular system according any one of claims 1 to 5, wherein the cavity (7,8) opens to the front side (10) and to the rear side (9) of the block (1).

7. Modular system according to any one of claims 1 to 6, wherein the blocks (1) each comprise two cavities (7,8) that open to the front side (10) and optionally to the rear side (9) of the block (1), the two cavities (7,8) being separated by a vertical separating wall (6).

8. Modular system according to any one of claims 1 to 7, wherein the system further comprises decoration elements (29), preferably in the form of blocks or cubes, the decoration elements (29) being configured to be insertable into the cavity (7,8) from the front side (10) of the masonry blocks (1).

9. A plantable wall (13) built from a modular system according to any one of claims 1 to 8, wherein a plurality of masonry blocks (1) are stacked onto each other to form the wall (13), containers (20) being inserted into the cavities (7,8) from the front side (10) of the blocks (1).

10. Plantable wall (13) according to claim 9, wherein two walls (18,19) made from masonry blocks (1) are arranged one at another, wherein the rear sides (9) of the blocks (1) of a first wall (18) and the rear sides (9) of the blocks (1) of a second wall (19) are facing each other and preferably positioned against each other, containers (20) being inserted into the cavities from the opposite front sides (10) of the first (18) and the second wall (19).

11. Plantable wall (13) according to claim 10, wherein the masonry blocks (1) of the first wall (18) and the masonry blocks (1) of the second wall (19) are arranged offset to each other in the height direction, wherein the offset preferably corresponds to half the height of a masonry block (1).

## Patentansprüche

1. Modulares System zum Aufbau einer bepflanzbaren Wand (13), umfassend hohle Mauerblöcke (1), wobei die Blöcke (1) ebene Auflageflächen zum Aufeinanderlegen der Blöcke (1) aufweisen und ferner eine Vorder- (10) und eine Rückseite (9) aufweisen und die Bausteine (1) jeweils einen Hohlraum (7,8) definieren, der zur Vorderseite (10) des Blocks (1) offen ist, wobei das System ferner Behälter (20) zum Aufnehmen von Pflanzsubstrat umfasst, wobei die Behälter (20) jeweils als offene Schublade konfiguriert sind, die von der Vorderseite (10) der Blöcke (1) in den Hohlraum (7,8) einführbar ist, **dadurch gekennzeichnet, dass** die Blöcke aus Beton bestehen und die Behälter (20) eine Öffnung (25) in ihrem Boden aufweisen, wobei die Öffnung (25) mit der Öffnung (11) in der Auflagefläche des Blocks (1) überlappt, wenn der Behälter (20) in den Hohlraum (7, 8) eingeführt ist, wobei das System ferner Entwässerungsblöcke (31) umfasst, die so konfiguriert sind, dass sie von der Vorderseite (10) der Mauerblöcke (1) her in den Hohlraum (7,8) einführbar sind, wobei die Entwässerungsblöcke (31) aus einem Drahtgeflecht bestehen, in dem Entwässerungselemente wie Kieselsteine untergebracht sind, oder die Entwässerungsblöcke (31) aus einem Block aus durchlässigem Beton mit einem Hohlraumgehalt zwischen 10% und 35% bestehen.

2. Modulares System nach Anspruch 1, wobei die Auflageflächen jeweils mindestens eine Öffnung zum Erhalten einer offenen Verbindung zwischen den Hohlräumen (7,8) von gestapelten Blöcken (1) umfassen.

3. Modulares System nach Anspruch 1 oder 2, wobei die Öffnung der Auflagefläche und/oder die Öffnung des Behälterbodens (25) an die Rückseite (9) des Blocks (1) angrenzt und vorzugsweise im Wesentlichen U-förmig ist.

4. Modulares System nach Anspruch 1, 2 oder 3, wobei der Behälter (20), wenn er vollständig in den Hohlraum (7,8) des Blocks (1) eingeführt ist, einen hervorstehenden Abschnitt aufweist, der zumindest teilweise von der Vorderseite (10) des Blocks (1) hervorsteht, wobei der vorstehende Abschnitt vorzugsweise eine Auffangschale zum Auffangen von Regenwasser bildet.

5. Modulares System nach Anspruch 4, wobei der Behälter (20) eine geneigte Vorderwand (21) aufweist, welche die Auffangschale definiert.

6. Modulares System nach einem der Ansprüche 1 bis 5, wobei der Hohlraum (7,8) zur Vorderseite (10) und zur Rückseite (9) des Blocks (1) offen ist.

7. Modulares System nach einem der Ansprüche 1 bis 6, wobei die Blöcke (1) jeweils zwei Hohlräume (7, 8) umfassen, die zur Vorderseite (10) und gegebenenfalls zur Rückseite (9) des Blocks (1) offen sind, wobei die beiden Hohlräume (7,8) durch eine vertikale Trennwand (6) getrennt sind.

8. Modulares System nach einem der Ansprüche 1 bis 7, wobei das System ferner Dekorationselemente (29) umfasst, vorzugsweise in Form von Blöcken oder Würfeln, wobei die Dekorationselemente (29) so konfiguriert sind, dass sie von der Vorderseite (10) der Mauerblöcke (1) her in den Hohlraum (7,8) einführbar sind.

9. Bepflanzbare Wand (13), aufgebaut aus einem modularen System nach einem der Ansprüche 1 bis 8, wobei mehrere Mauerblöcke (1) aufeinandergestapelt sind, um die Wand (13) zu bilden, wobei Behälter (20) von der Vorderseite (10) der Blöcke (1) in die Hohlräume (7,8) eingeführt sind.

10. Bepflanzbare Wand (13) nach Anspruch 9, wobei zwei Wände (18, 19) aus Mauerblöcken (1) aneinander angeordnet sind, wobei die Rückseiten (9) der Blöcke (1) einer ersten Wand (18) und die Rückseiten (9) der Blöcke (1) einer zweiten Wand (19) einander zugewandt sind und vorzugsweise gegeneinander positioniert sind, wobei Behälter (20) von den gegenüberliegenden Vorderseiten (10) der ersten (18) und der zweiten Wand (19) in die Hohlräume eingeführt sind.

11. Bepflanzbare Wand (13) nach Anspruch 10, wobei die Mauerblöcke (1) der ersten Wand (18) und die Mauerblöcke (1) der zweiten Wand (19) in Höhenrichtung zueinander versetzt angeordnet sind, wobei der Versatz vorzugsweise der halben Höhe eines Mauerblocks (1) entspricht.

## Revendications

1. Système modulaire pour la construction d'une paroi végétalisable (13) comprenant des blocs de maçonnerie creux (1), lesdits blocs (1) ayant des surfaces d'appui planes pour placer les blocs (1) les uns sur les autres et ayant en outre une face avant (10) et une face arrière (9) et les blocs de construction (1) définissant chacun une cavité (7, 8) qui s'ouvre sur la face avant (10) du bloc (1), le système comprenant en outre des conteneurs (20) destinés à recevoir du substrat de plantation, dans lequel les conteneurs (20) sont chacun configurés comme un tiroir ouvert sur le dessus qui peut être inséré dans la cavité (7, 8) depuis la face avant (10) des blocs (1), **caractérisé en ce que** lesdits blocs sont fabriqués à partir de béton et les conteneurs (20) ont une ouverture (25) dans leur fond, ladite ouverture (25) chevauchant l'ouverture (11) dans la surface d'appui du bloc (1) lorsque le conteneur (20) est inséré dans la cavité (7, 8), dans lequel le système comprend en outre des blocs de drainage (31) configurés pour pouvoir être insérés dans la cavité (7, 8) de la face avant (10) des blocs de maçonnerie (1), dans lequel les blocs de drainage (31) sont faits à partir d'un grillage métallique qui abrite des éléments de drainage, tels que des galets, ou les blocs de drainage (31) sont faits à partir d'un bloc de béton perméable ayant une teneur en vide comprise entre 10 % et 35 %.

2. Système modulaire selon la revendication 1, dans lequel les surfaces d'appui comprennent chacune au moins une ouverture pour obtenir une connexion ouverte entre les cavités (7, 8) des blocs empilés (1).

3. Système modulaire selon la revendication 1 ou 2, dans lequel l'ouverture de la surface d'appui et/ou l'ouverture du fond de conteneur (25) est contiguë à la face arrière (9) du bloc (1) et est de préférence sensiblement en forme de U.

4. Système modulaire selon la revendication 1, 2 ou 3, dans lequel le conteneur (20), lorsqu'il est complètement inséré dans la cavité (7, 8) du bloc (1), présente une section en saillie qui fait saillie au moins partiellement du côté avant (10) du bloc (1), la section en saillie formant de préférence un bac de collecte pour recueillir l'eau de pluie.

5. Système modulaire selon la revendication 4, dans lequel le conteneur (20) a une paroi frontale inclinée (21) définissant ledit bac de collecte.

6. Système modulaire selon l'une quelconque des revendications 1 à 5, dans lequel la cavité (7, 8) s'ouvre sur le côté avant (10) et sur le côté arrière (9) du bloc (1).

7. Système modulaire selon l'une quelconque des revendications 1 à 6, dans lequel les blocs (1) comprennent chacun deux cavités (7, 8) qui s'ouvrent sur le côté avant (10) et éventuellement sur le côté arrière (9) du bloc (1), les deux cavités (7, 8) étant séparées par une paroi de séparation verticale (6).

8. Système modulaire selon l'une quelconque des revendications 1 à 7, dans lequel le système comprend en outre des éléments de décoration (29), de préférence sous la forme de blocs ou de cubes, les éléments de décoration (29) étant configurés pour pouvoir être insérés dans la cavité (7, 8) depuis le côté avant (10) des blocs de maçonnerie (1).

9. Paroi végétalisable (13), construit à partir d'un système modulaire selon l'une quelconque des revendications 1 à 8, dans laquelle plusieurs blocs de maçonnerie (1) sont empilés les uns sur les autres pour former la paroi (13), des conteneurs (20) étant insérés dans les cavités (7, 8) depuis le côté avant (10) des blocs (1).

10. Paroi végétalisable (13) selon la revendication 9, dans laquelle deux parois (18, 19) faites en blocs de maçonnerie (1) sont disposées l'une à côté de l'autre, les faces arrière (9) des blocs (1) d'une première paroi (18) et les faces arrière (9) des blocs (1) d'une deuxième paroi (19) étant tournées l'une vers l'autre et de préférence positionnées l'une contre l'autre, des conteneurs (20) étant insérés dans les cavités à partir des faces avant (10) opposées de la première (18) et de la deuxième paroi (19).

11. Paroi végétalisable (13) selon la revendication 10, dans laquelle les blocs de maçonnerie (1) de la première paroi (18) et les blocs de maçonnerie (1) de la deuxième paroi (19) sont disposés décalés les uns par rapport aux autres dans le sens de la hauteur, dans laquelle le décalage correspond de préférence à la moitié de la hauteur d'un bloc de maçonnerie (1).
